# EUROPEAN PATENT SPECIFICATION

(11) **EP 1 095 386 B1**
(45) Date of publication and mention of the grant of the patent: **03.03.2004**
(21) Application number: 99957109.4
(22) Date of filing: 15.06.1999
(51) Int. Cl.: H01G 9/20

(54) **METHOD FOR MANUFACTURING A PHOTOVOLTAIC ELEMENT CONTAINING A LIQUID ELECTROLYTE**
VERFAHREN ZUR HERSTELLUNG EINES PHOTOVOLTAISCHEN BAUELEMENTS MIT EINEM FLÜSSIGEN ELECTROLYTEN
PROCEDE DE FABRICATION D'UN ELEMENT PHOTOVOLTAIQUE CONTENANT UN ELECTROLYTE LIQUIDE

(30) Priority: 18.06.1998 NL 1009432
(43) Date of publication of application: 02.05.2001
(73) Proprietor: Stichting Energieonderzoek Centrum Nederland(ECN), 1755 ZG Petten (NL)
(72) Inventor: TIP, Andries, Cornelis, NL-1827 BM Alkmaar (NL); SPÄTH, Martin, NL-1722 GD Zuid-Scharwoude (NL); SOMMELING, Paul, Matthieu, NL-2316 XV Leiden (NL); VAN ROOSMALEN, Johannes, Adrianus, Maria, NL-1826 GG Alkmaar (NL)
(74) Representative: Dokter, Hendrik Daniel
(86) International application number: PCT/NL1999/000370
(87) International publication number: WO 1999/066519

(56) References cited:
- EP-A- 0 614 237
- EP-A- 0 855 726
- WO-A-97/15959
- US-A- 4 927 721
- PATENT ABSTRACTS OF JAPAN vol. 011, no. 103 (P-562), 2 April 1987 (1987-04-02) & JP 61 252537 A (MATSUSHITA ELECTRIC IND CO LTD), 10 November 1986 (1986-11-10)
- SPÄTH, M. ET AL.: "New concepts of nano-crystalline organic photovoltaic devices" 1997 26TH PHOTOVOLTAIC SPECIALISTS CONFERENCE,30 September 1997 (1997-09-30) - 3 October 1997 (1997-10-03), pages 503-506, XP002109862 Anaheim, CA

## Description

The invention relates to a method for manufacturing a photovoltaic element comprising a layered structure of at least a first electrically conductive layer, a layer of crystalline metal oxide semiconductor material deposited on the first electrically conductive layer, a second electrically conductive layer, and an electrolytic liquid contained between the layer of semiconductor material and the second electrically conductive layer, wherein at least one of the electrically conductive layers is transparent and is deposited on a transparent substrate, which method comprises the steps of
(i) providing a layer of crystalline metal oxide semiconductor material deposited on a first electrically conductive layer and providing an electrically conductive layer,
(ii) arranging on the first conductive layer or second conductive layer a thermoplastic adhesive material in a form such that this provides an edge zone bounding the deposited layer of semiconductor material in peripheral direction, and
(iii) arranging the second respectively the first electrically conductive layer over said edge zone, wherein the adhesive material on this edge zone and the layer of semiconductor material bounded thereby are received between the first and the second electrically conductive layer.

Such a method is particularly important for manufacturing so-called and per se known dye-sensitized titanium dioxide solar cells. In these solar cells the photoelectrode is for instance formed by a photoactive layer of nanocrystalline titanium dioxide, provided with an organic dye-sensitizer, deposited on a transparent first conductive coating layer on a first glass substrate. The counter-electrode is for instance formed by a second glass substrate provided with a second conductive coating. The first and second glass substrate are mutually connected using a suitable adhesive, wherein a space filled with an electrolytic liquid is formed between the titanium dioxide layer and the second glass substrate. Also known are dye-sensitized titanium dioxide solar cells in which, instead of glass substrates, substrates of a polymer foil are used whereby a flexible solar cell is obtained.

Known from the international patent application WO 97/15959 is a method for manufacturing a photovoltaic cell, which cell comprises a working electrode and a counter-electrode which are formed on flexible polymer substrates. The working electrode comprises an electrically conductive foil, a semiconductor material and an electrolyte. The counter-electrode consists of a flexible substrate, a catalyst and a sealing frame.

According to this known method the working electrode and the counter-electrode are made on ribbons of a suitable polymer, wherein sealing frames of a thermoplastic adhesive are arranged on one of these ribbons. These ribbons are guided between two heated pressure rollers, above which is disposed a dispensing device which supplies an overmeasure of electrolyte which is collected in the space bounded by the two ribbons in the pressure rollers. During the contact with the pressure rollers the sealing frames melt and electrolyte is enclosed in spaces bounded in each case by a working electrode on the one ribbon and a corresponding counter-electrode on the other ribbon and by the sealing frames with which both ribbons are mutually adhered.

The known method has the drawback that in order to seal the photovoltaic cell the entire surface thereof is heated, which may have an adverse effect on the performance of this cell, particularly in the case of a cell in which an organic dye-sensitizer is also arranged on the working electrode or when the second electrically conductive layer is provided with a catalyst which must enhance the transfer of charge carriers between electrolyte and second electrical conductor. Heating of an organic dye-sensitizer or a catalyst can result in modification of these substances and therefore in a reduction of the activity intended with these substances.

Another drawback of sealing a photovoltaic cell according to the known method is a result of fall out of the pressure on the layered structure of the cell when the two mutually adhered ribbons with the working electrode and counter-electrode arranged thereon are driven from the pressure rollers, at which moment the heated electrolyte between the two electrodes causes an overpressure in the interior of the cell and therewith a stress on the sealing edges of the cell.

Another drawback of the known method of sealing a photovoltaic cell is that this method is unsuitable for sealing a cell of which the structure comprises at least one non-flexible layer: such a non-flexible layer is not resistant to the transport between two pressure rollers.

From EP-A-0 855 726 is known a photovoltaic element wherein at least one electrically conductive layer is deposited on a glass substrate or polymer sheet. A crystalline metal oxide semiconductor material (titanium dioxide) is deposited on the substrate, and an electrolyte medium is applied onto the semiconductor layer. Further, the element is provided with a second transparent layer of glass or polymer sheet covered on the inner side with an electrically conducting layer, serving as a cathode. The assembly can be sealed with a gasket consisting of thermoplastic foil.

US-A-4 927 721 discloses a photo-electrochemical cell comprising a polycrystalline metal oxide semiconductor layer having a substantially monomolecular chromophore layer in a surface zone. The metal oxide semiconductor layer is a TiO₂-layer having a roughness factor of preferably more than 200, deposited on a Ti-substrate. The lateral termination of a cell of this kind may be a frame of electrically insulating material, e.g. plastic or glass.

It is an object of the invention to propose a method for sealing a photovoltaic element which has no adverse effect on the intended performance of this element, which causes no overpressure in the interior of this element and which is suitable for sealing a photovoltaic element of which the structure comprises at least one non-flexible layer.

These objectives are achieved and other advantages realized with a method of the type specified in the preamble, which method is characterized according to the invention by the successive steps of
(iv) locally heating at least a first part of the edge zone defined by the thermoplastic material while not heating the material of the rest of the element and simultaneously exerting pressure locally on the surface of this first part to cause the adhesive to adhere there to the first and second conductive layer in order to form a space partially bounded by the layer of semiconductor material, the first part of the edge zone and the second electrically conductive layer,
(v) introducing an electrolytic liquid into the partially bounded space in a quantity such that the second electrically conductive layer is spatially separated by this liquid from the layer of semiconductor material, and
(vi) locally heating the remaining part of the edge zone defined by the thermoplastic material not yet heated in the fourth step (iv) while not heating the material of the rest of the element and simultaneously exerting pressure locally on the surface of this remaining part to cause the adhesive to adhere there to the first and second conductive layer and to enclose the liquid in a space which is wholly bounded by the layer of semiconductor material, the edge zone and the second electrically conductive layer.

In the fourth step (iv) of the method according to the invention two layers with respectively a working electrode and a counter-electrode are partially connected to each other along a first part of an edge zone which encloses the layer of semiconductor material in a manner such that a space is formed for receiving an electrolyte therein. In the fifth step (v) of the method this electrolyte is subsequently received in said space, whereafter in the sixth step (vi) said space is completely closed by connecting the two layers along the remaining part of the edge zone.

Because the edge zone is heated locally, the material of the active part of the photovoltaic cell is not heated, so that this material does not degrade and the intended performance thereof is not reduced, while no internal pressure is built up in the cell either, so that formed sealing edges can cool in stress-free manner.

With a suitably chosen thermoplastic adhesive it is possible to make a moisture-proof and airtight sealing edge in a part of a photovoltaic cell wetted by electrolyte by displacing the electrolyte by exerting pressure and to locally effect a good adhesion between the parts of the cell for connecting by increasing the temperature. In an advantageous embodiment of the method according to the invention the fifth step (v) and the sixth step (vi) are therefore performed simultaneously, so that the production time for a cell can be shortened and the production cost reduced accordingly.

Sealing of a solar cell by local heating of at least a part of an edge zone can also be applied according to the invention in a solar cell wherein the electrolytic liquid has such a high viscosity that the liquid is applied as a layer of an electrolytic medium on a layer of semiconductor material.

The invention therefore further relates to a method for manufacturing a photovoltaic element comprising a layered structure of at least a first electrically conductive layer, a layer of crystalline metal oxide semiconductor material deposited on the first electrically conductive layer, a second electrically conductive layer and an electrolytic medium contained between the layer of semiconductor material and the second electrically conductive layer, wherein at least one of the electrically conductive layers is transparent and is deposited on a transparent substrate, which method comprises the steps of
(i) providing a layer of crystalline metal oxide semiconductor material deposited on a first electrically conductive layer, on which layer of semiconductor material a layer of an electrolytic medium is arranged, and providing a second electrically conductive layer,
(ii) arranging on the first conductive layer or second conductive layer a thermoplastic adhesive material in a form such that this provides an edge zone which bounds in peripheral direction the deposited layer of semiconductor material and the electrolytic medium arranged thereon, and
(iii) arranging the second respectively the first electrically conductive layer over said edge zone, wherein the adhesive material on this edge zone and the layer of semiconductor material bounded thereby and the electrolytic medium arranged thereon are received between the first and the second electrically conductive layer, which method is characterized by the step of
(iv) locally heating the edge zone defined by the thermoplastic material while not heating the material of the rest of the element and simultaneously exerting pressure locally on the surface of this edge zone to cause the adhesive to adhere there to the first and second conductive layer for enclosing the electrolytic medium in a space which is wholly bounded by the layer of semiconductor material, the edge zone and the second electrically conductive layer.

Sealing of a solar cell by local heating of at least a part of an edge zone can also be applied according to the invention in a solar cell wherein the electrolytic liquid has such a high viscosity that the liquid is applied as a layer of an electrolytic medium on a layer of semiconductor material.

Sealing of a solar cell by local heating of at least a part of an edge zone can also be applied according to the invention in a solar cell wherein the electrolytic liquid is received in a layer of semiconductor material.

The invention therefore further relates to a method for manufacturing a photovoltaic element comprising a layered structure of at least a first electrically conductive layer, a layer of crystalline metal oxide semiconductor material deposited on the first electrically conductive layer, a second electrically conductive layer, and an electrolytic medium received in the layer of semiconductor material, wherein at least one of the electrically conductive layers is transparent and is deposited on a transparent substrate, which method comprises the steps of
(i) providing a layer of crystalline metal oxide semiconductor material deposited on a first electrically conductive layer, in which layer of semiconductor material an electrolytic medium is received, and providing a second electrically conductive layer,
(ii) arranging on the first conductive layer or second conductive layer a thermoplastic adhesive material in a form such that this provides an edge zone which bounds in peripheral direction the deposited layer of semiconductor material and the electrolytic medium received therein, and
(iii) arranging the second respectively the first electrically conductive layer over said edge zone, wherein the adhesive material on this edge zone and the layer of semiconductor material bounded thereby and the electrolytic medium received therein are received between the first and the second electrically conductive layer, which method is characterized by the step of
(iv) locally heating the edge zone defined by the thermoplastic material while not heating the material of the rest of the element and simultaneously exerting pressure locally on the surface of this edge zone to cause the adhesive to adhere there to the first and second conductive layer for enclosing the layer of semiconductor material and the electrolytic medium received therein in a space which is wholly bounded by the first electrically conductive layer, the edge zone and the second electrically conductive layer.

The thermoplastic adhesive material for applying in the second step (ii) is for instance a foil of a thermoplastic polymer material in a form corresponding with that of the edge zone.

In yet another embodiment the local heating in the fourth (iv) and sixth (vi) step is performed using a stamping device provided with a temperature control.

An example of such a stamping device is an apparatus commercially available under the name thermode, the most important component of which is a metal stamp which can be lowered onto a surface with a precisely controlled pressure, and the temperature of which is precisely controllable.

The invention will now be elucidated hereinbelow on the basis of embodiments and with reference to the annexed drawings.

In the drawings:
Fig. 1-4 show a schematic representation of the successive steps in a method for manufacturing a solar cell according to the invention,
Fig. 5 shows a top view of a few solar cells according to the invention arranged on a ribbon-like substrate in a phase prior to enclosing of the electrolytic liquid in the separate cells,
Fig. 6 is a perspective view of a thermode placed on a substrate with solar cells for sealing these cells,
Fig. 7 shows a graphic representation of the temperature and the pressure force of the thermode shown in Fig. 6 as a function of time during the sealing of a solar cell,
Fig. 8 shows in cross-section a first embodiment of a solar cell manufactured according to the invented method,
Fig. 9 shows in cross-section a second embodiment of a solar cell manufactured according to the invented method,
Fig. 10 shows in cross-section a third embodiment of a solar cell manufactured according to the invented method,
Fig. 11 shows in cross-section a fourth embodiment of a solar cell manufactured according to the invented method,
Fig. 12 shows in exploded view a schematic representation of a method for manufacturing a fifth embodiment of a solar cell, and
Fig. 13 shows in exploded view a schematic representation of a method for manufacturing a sixth embodiment of a solar cell.

Corresponding components are designated in the figures with the same reference numerals.

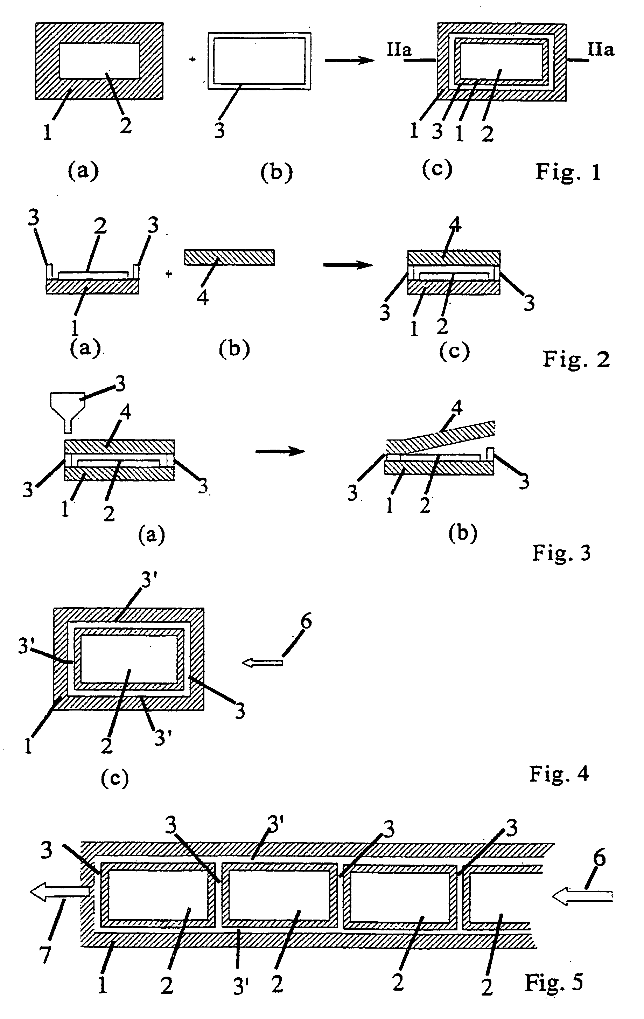

Fig. 1(a) shows in top view a flexible substrate 1 of a transparent plastic, provided with a transparent electrically conductive layer, and a layer 2 of active material deposited on this substrate, for instance titanium dioxide (TiO₂), provided with an organic dye-sensitizer. Placed on substrate 1 around the layer of active material 2 is a passe-partout 3 (Fig. 1(b)) of a hot-melting foil, for instance a polymer marketed under the brand name Surlyn® by Du Pont (Fig. 1(c)).

Over substrate 1 and passe-partout 3, shown in cross-section in Fig. 2(a) along line IIa-IIa of Fig. 1(c), a second electrically conductive layer 4 (Fig. 2(b)) is arranged (Fig. 2(c)). In a solar cell with a flexible transparent substrate 1 this second layer 4 can be a conductor deposited on a transparent, rigid or flexible layer or consist of a rigid or flexible layer of conductive material.

In a first sealing step the assembly of substrate 1 and second conductive layer 4 are partially connected to each other by heating a few edges of passe-partout 3 under pressure with a thermode 5 (Fig. 3 (a)), wherein edges 3' of melted adhesive material form a liquid-tight adhesion of substrate 1 and conductive layer 4.

In a subsequent step (Fig. 4, shown in top view) the cell is filled with electrolytic liquid (represented by arrow 6) via an opening between substrate 1 and layer 4 along an as yet unglued edge 3 of the passe-partout, whereafter the remaining edge 3 is heated under pressure with the thermode so that a completely liquid-tight cell is obtained.

Fig. 5 shows a ribbon-like flexible substrate 1 of a transparent plastic provided with a transparent electrically conductive layer and regions 2 of active material deposited on this substrate. A passe-partout 3, 3' of a hot-melting foil is arranged on substrate 1 around the regions of active material 2, and over substrate 1 and passe-partout 3, 3' is deposited a flexible ribbon-like foil which is provided on the side directed toward the substrate with an electrically conductive layer. Passe-partout 3, 3' takes the form of a ladder, the "posts" 3' of which have been heated under pressure with a thermode and now form a liquid-tight adhesion between substrate 1 and the ribbon-like foil arranged thereon, and the "rungs" 3 of which have not yet been heated. Substrate 1 and the foil connected thereto by posts 3' of the passe-partout thus form an elongate channel which can be filled via an opening with an electrolytic liquid (indicated by arrow 6), wherein air can easily escape via the other opening (indicated by arrow 7). After the complete channel has thus been filled with electrolyte, the respective solar cells are closed by successively heating "rungs" 3 of the ladder-like passe-partout under pressure with a thermode.

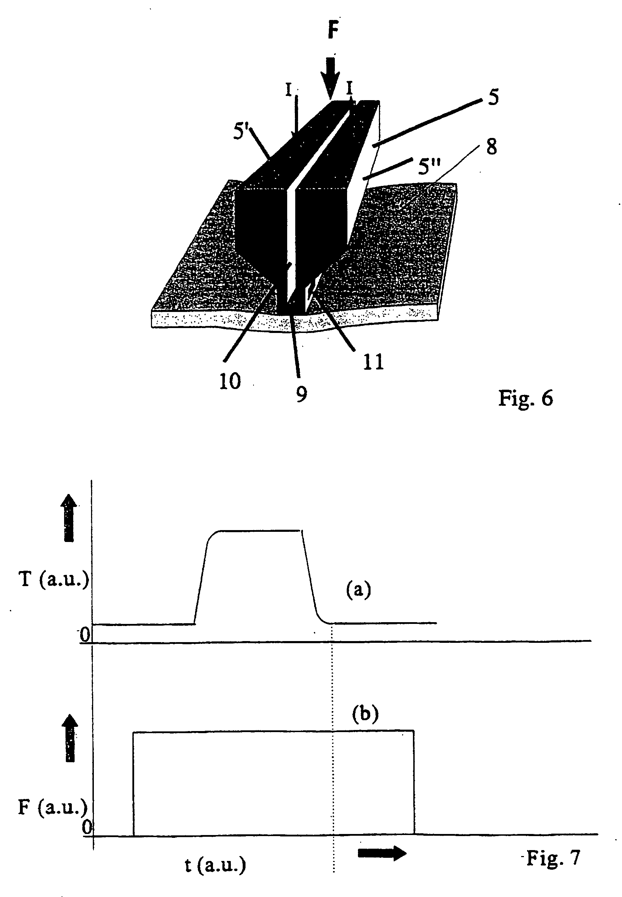

Fig. 6 shows a thermode 5 placed on a layered structure 8 of a substrate with solar cells for sealing these cells. Thermode 5 substantially comprises a metal strip with a flat underside 9 and a longitudinal groove 10 dividing the strip into parts 5', 5", which form an electrical series connection for a heating current I. Sealing of a solar cell in layered structure 8 takes place by pressing thermode 5 with a predetermined force F onto structure 8 and heating thermode 5 to a temperature which is sufficiently high to cause melting of the thermoplastic material between the layers of structure 8. For this purpose the heating current I is controlled in precise manner in a per se known control using the voltage over a thermocouple 11 placed close to the flat underside 9.

Fig. 7 shows the temperature T (curve a) and the pressing force F (curve b) of the thermode 5 shown in Fig. 6 as a function of the time t (all in arbitrary units a.u.) during sealing of the solar cell. It is clear from the figure that in a method according to the invention, otherwise than in the prior art, sealing of a solar cell takes place under locally sharply defined conditions for pressure and temperature.

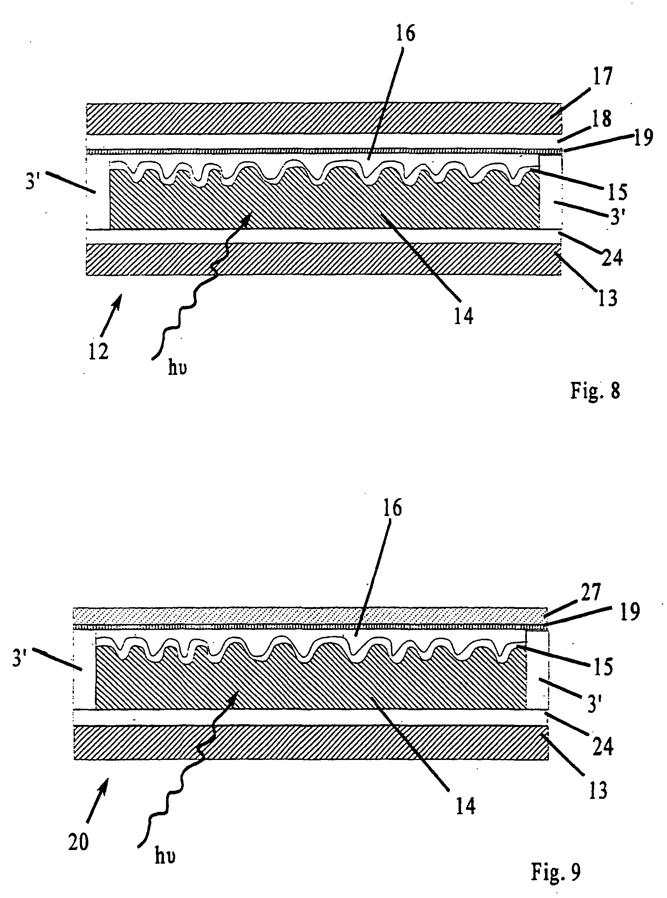

Fig. 8 shows the layered structure of a solar cell 12 which is substantially built up of a foil 13 of a transparent polymer on which on a transparent electrically conductive layer 24 is deposited a layer of titanium dioxide 14, a layer 15 of a suitable dye-sensitizer, a lithium iodide solution 16 and a flexible polymer 17 on which a layer 18 of a transparent conductive oxide (TCO) is deposited. The figure further shows a layer 19 (not shown to scale) of a catalyst for the conversion of neutral I in the lithium iodide solution to I⁻ by accepting an electron from counter-electrode 18. In this solar cell 12 light (indicated by arrows designated hν, wherein h represents Planck's constant and ν the frequency of the incident light) is incident on dye layer 15 via transparent substrate 13 and layer 14 of titanium dioxide.

Fig. 9 shows an alternative embodiment of a solar cell 20 of the solar cell shown in Fig. 8, wherein the counter-electrode is formed by a thin metal foil 27.

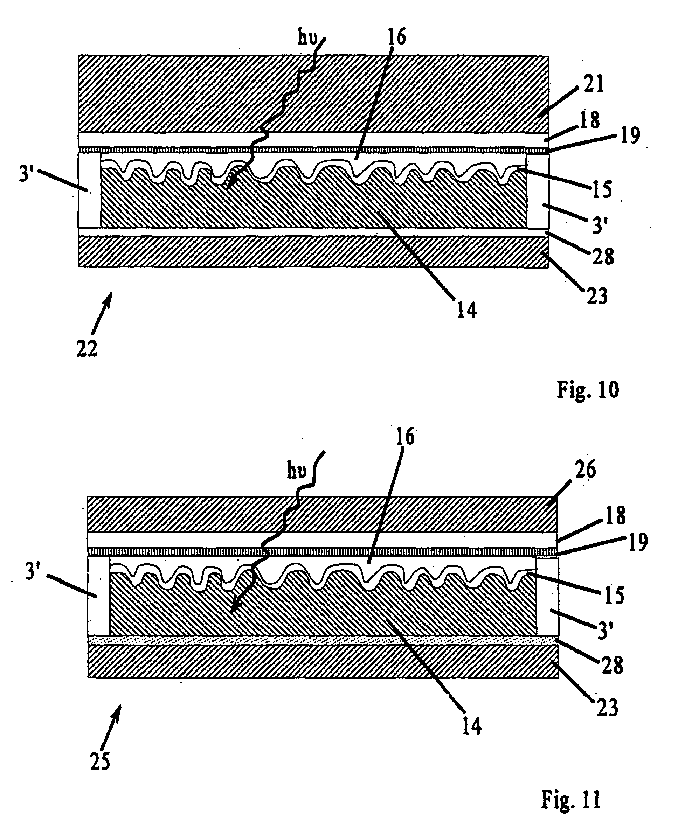

Fig. 10 shows the layered structure of a solar cell 22 which is substantially built up of a titanium foil 23, a porous layer of nanocrystalline titanium dioxide 14, a layer 15 of a suitable dye-sensitizer, a lithium iodide solution 16 and a glass substrate 21 on which a layer 18 of a transparent conductive oxide (TCO) is deposited. Layer 15 is shown in greatly simplified manner. In reality the dye-sensitizer is applied in a solution to semiconductor layer 14 and penetrates into the pores thereof, so that the dye covers the whole semiconductor surface. The layer of titanium dioxide 14 is formed in accordance with a per se known method by sintering a dispersion of colloidal particles of titanium dioxide onto titanium foil 23, wherein between sintered titanium dioxide 14 and titanium foil 23 a layer of titanium dioxide 28 results which protects the underlying layer 23 against the corrosive action of the lithium iodide 16. The figure further shows a layer 19 (not shown to scale) of a catalyst, for instance carbon, for the conversion of neutral I in the lithium iodide solution to I⁻ by accepting an electron from counter-electrode 18. In this solar cell 22 light (indicated by arrows designated hν, wherein h represents Planck's constant and ν the frequency of the incident light) is incident on dye layer 15 via the counter-electrode assembly 21, 18, 19 and lithium iodide solution 16.

Fig. 11 shows an embodiment of a solar cell 25 as alternative to the solar cell shown in Fig. 10, wherein counter-electrode 18 is deposited on a flexible transparent foil 26 of polyethylene terephthalate (PET) whereby a flexible and very thin solar cell is obtained.

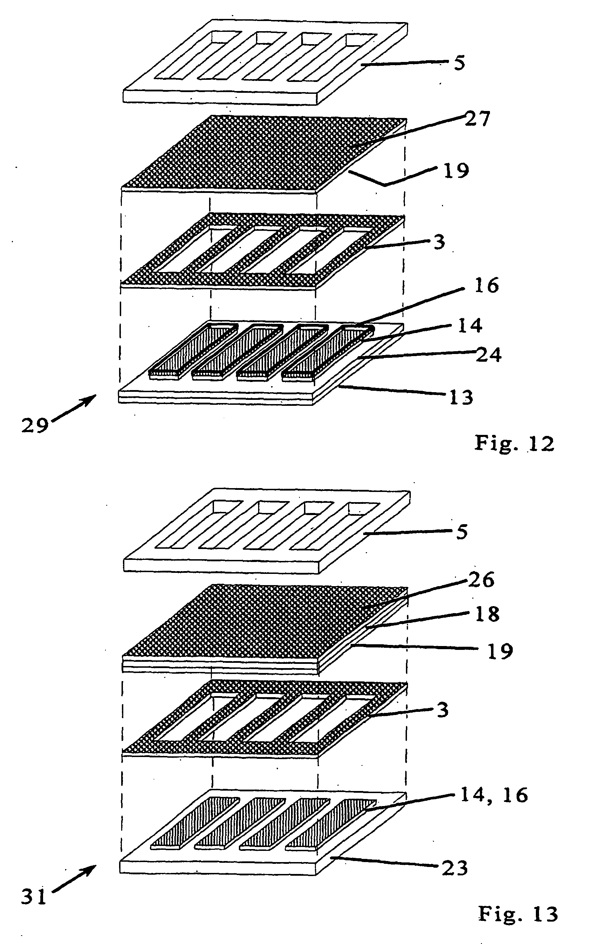

Fig. 12 illustrates a method of making an embodiment of a solar cell 29 as alternative to the solar cell shown in Fig. 9, wherein on a transparent plastic substrate 13 provided with a transparent conductive layer 24 are deposited regions of nanocrystalline titanium dioxide 14 on which a layer of a high-viscous electrolytic liquid 16 is arranged. Laid on substrate 13 round layers 14, 16 is a passe-partout 3 of a hot-melting polymer, on which a titanium foil 27 provided with a catalyst layer 19 is then placed, whereafter the cell is sealed using a thermode 5, the active surface of which corresponds with the form of passe-partout 3.

Fig. 13 illustrates a method of making another embodiment of a solar cell 31 as alternative to the solar cell shown in Fig. 11, wherein regions of nanocrystalline titanium dioxide 14 which are saturated with a high-viscous electrolytic liquid 16 are deposited on a substrate 23 of titanium foil. Laid on titanium foil 23 round layers 2, 16 is a passe-partout 3 of a hot-melting polymer, on which is then placed a transparent plastic foil 26 provided with a transparent catalyst layer 19 and a transparent conductive layer 18, whereafter the cell is sealed using a thermode 5, the active surface of which corresponds with the form of passe-partout 3.

## Claims

1. Method for manufacturing a photovoltaic element comprising a layered structure (12, 20, 22, 25) of at least a first electrically conductive layer (24, 23), a layer of crystalline metal oxide semiconductor material (2, 14) deposited on the first electrically conductive layer (24, 23), a second electrically conductive layer (18, 27) and an electrolytic liquid (16) contained between the layer of semiconductor material (2, 14) and the second electrically conductive layer (18, 27), wherein at least one of the electrically conductive layers (24, 23, 18, 27) is transparent and is deposited on a transparent substrate (21, 26, 13), which method comprises the steps of
(i) providing a layer of crystalline metal oxide semiconductor material (2, 14) deposited on a first electrically conductive layer (24, 23) and providing a second electrically conductive layer (18, 27),
(ii) arranging on the first conductive layer (24, 23) or second conductive layer (18, 27) a thermoplastic adhesive material (3) in a form such that this provides an edge zone bounding the deposited layer of semiconductor material (14) in peripheral direction, and
(iii) arranging the second (18, 27) respectively the first (24) electrically conductive layer over said edge zone, wherein the adhesive material (3) on this edge zone and the layer of semiconductor material (14) bounded thereby are received between the first (24) and the second (18, 27) electrically conductive layer, **characterized by** the successive steps of
(iv) locally heating at least a first part of the edge zone defined by the thermoplastic material (3) while not heating the material of the rest of the element and simultaneously exerting pressure locally on the surface of this first part to cause the adhesive (3) to adhere there to the first (24, 23) and second (18, 27) conductive layer in order to form a space partially bounded by the layer of semiconductor material (14), the first part of the edge zone (3') and the second electrically conductive layer (18, 27),
(v) introducing an electrolytic liquid (16) into the partially bounded space in a quantity such that the second electrically conductive layer (18, 27) is spatially separated by this liquid (16) from the layer of semiconductor material (14), and
(vi) locally heating the remaining part of the edge zone defined by the thermoplastic material (3) not yet heated in the fourth step (iv) while not heating the material of the rest of the element and simultaneously exerting pressure locally on the surface of this remaining part to cause the adhesive (3) to adhere there to the first (24, 23) and second (18, 27) conductive layer and to enclose the liquid (16) in a space which is wholly bounded by the layer of semiconductor material (14), the edge zone (3') and the second electrically conductive layer (18, 27).

2. Method as claimed in claim 1, **characterized in that** the fifth step (v) and the sixth step (vi) are performed simultaneously.

3. Method for manufacturing a photovoltaic element comprising a layered structure (29) of at least a first electrically conductive layer (24), a layer of crystalline metal oxide semiconductor material (14) deposited on the first electrically conductive layer (24), a second electrically conductive layer (27) and an electrolytic medium (16) contained between the layer of semiconductor material (14) and the second electrically conductive layer (27), wherein at least one of the electrically conductive layers (24) is transparent and is deposited on a transparent substrate (13), which method comprises the steps of
(i) providing a layer of crystalline metal oxide semiconductor material (14) deposited on a first electrically conductive layer (24), on which layer of semiconductor material (14) a layer of an electrolytic medium (16) is arranged, and providing a second electrically conductive layer (27),
(ii) arranging on the first conductive layer (24) or second conductive layer (27) a thermoplastic adhesive material (3) in a form such that this provides an edge zone which bounds in peripheral direction the deposited layer of semiconductor material (14) and the electrolytic medium (16) arranged thereon, and
(iii) arranging the second (27) respectively the first (24) electrically conductive layer over said edge zone, wherein the adhesive material (3) on this edge zone and the layer of semiconductor material (14) bounded thereby and the electrolytic medium (16) arranged thereon are received between the first (24) and the second (27) electrically conductive layer, **characterized by** the step of
(iv) locally heating the edge zone defined by the thermoplastic material (3) while not heating the material of the rest of the element and simultaneously exerting pressure locally on the surface of this edge zone to cause the adhesive (3) to adhere there to the first (24) and second (27) conductive layer for enclosing the electrolytic medium (16) in a space which is wholly bounded by the layer of semiconductor material (14), the edge zone (3) and the second electrically conductive layer (27).

4. Method for manufacturing a photovoltaic element comprising a layered structure (31) of at least a first electrically conductive layer (23), a layer of crystalline metal oxide semiconductor material (14) deposited on the first electrically conductive layer (23), a second electrically conductive layer (18) and an electrolytic medium (16) received in the layer of semiconductor material (14), wherein at least one of the electrically conductive layers (18) is transparent and is deposited on a transparent substrate (26), which method comprises the steps of
(i) providing a layer of crystalline metal oxide semiconductor material (14) deposited on a first electrically conductive layer (23), in which layer of semiconductor material (14) an electrolytic medium (16) is received, and providing a second electrically conductive layer (18),
(ii) arranging on the first conductive layer (23) or second conductive layer (18) a thermoplastic adhesive material (3) in a form such that this provides an edge zone which bounds in peripheral direction the deposited layer of semiconductor material (14) and the electrolytic medium received therein, and
(iii) arranging the second (18) respectively the first (23) electrically conductive layer over said edge zone, wherein the adhesive material (3) on this edge zone and the layer of semiconductor material (14) bounded thereby and the electrolytic medium received therein are received between the first (23) and the second (18) electrically conductive layer, **characterized by** the step of
(iv) locally heating the edge zone defined by the, thermoplastic material (3) while not heating the material of the rest of the element and simultaneously exerting pressure locally on the surface of this edge zone to cause the adhesive (3) to adhere there to the first (23) and second (18) conductive layer for enclosing the layer of semiconductor material (14) and the electrolytic medium (16) received therein in a space which is wholly bounded by the first electrically conductive layer, the edge zone (3) and the second electrically conductive layer (18).

5. Method as claimed in any of the foregoing claims, **characterized in that** the thermoplastic adhesive material (3) for applying in the second step (ii) is a foil of a thermoplastic polymer material in a form corresponding with that of the edge zone.

6. Method as claimed in any of the foregoing claims, **characterized in that** the local heating in the fourth (iv) respectively the sixth (vi) step is performed using a stamping device provided with a temperature control.

## Patentansprüche

1. Verfahren zur Herstellung eines photovoltaischen Elements, das eine Schichtstruktur (12, 20, 22, 25) von zumindest einer ersten elektrisch leitenden Schicht (24, 23), einer auf der ersten elektrisch leitenden Schicht (24, 23) aufgetragenen Schicht von kristallinem Metalloxid-Halbleitermaterial (2, 14), einer zweiten elektrisch leitenden Schicht (18, 27) und einer sich zwischen der Halbleiterschicht (2, 14) und der zweiten elektrisch leitenden Schicht (18, 27) befindenden Elektrolytflüssigkeit (16) umfasst, wobei zumindest eine der elektrisch leitenden Schichten (24, 23, 18, 27) transparent ist und auf einem transparenten Substrat (21, 26, 13) aufgetragen ist, und dieses Verfahren umfasst folgende Schritte:
(i) das Beschaffen einer auf der ersten elektrisch leitenden Schicht (24, 23) aufgetragenen Schicht von kristallinem Metalloxid-Halbleitermaterial (2, 14) und das Beschaffen einer zweiten elektrisch leitenden Schicht (18, 27),
(ii) das in einer solchen Form auf der ersten leitenden Schicht (24, 23) oder zweiten leitenden Schicht (18, 27) Anbringen eines thermoplastischen Klebstoffmaterials (3), dass dieses eine die aufgetragene Schicht Halbleitermaterial (14) in Umfangsrichtung begrenzende Randzone verschafft, und
(iii) das Anbringen der zweiten (18, 27) beziehungsweise der ersten (24) elektrisch leitenden Schicht über besagter Randzone, wobei das Klebstoffmaterial (3) auf dieser Randzone und die dadurch begrenzte Schicht Halbleitermaterial (14) zwischen der ersten (24) und der zweiten (18, 27) elektrisch leitenden Schicht aufgenommen werden, **gekennzeichnet durch** die aufeinander folgenden Schritte:
(iv) das örtliche Erhitzen von zumindest einem ersten Teil der von dem thermoplastischen Material (3) bestimmten Randzone, während das Material des Restes des Elements nicht erhitzt wird, und gleichzeitig das örtliche Ausüben von Druck auf die Oberfläche dieses ersten Teils, um zu erreichen, dass der Klebstoff dort an der ersten (24, 23) und zweiten (18, 27) leitenden Schicht haftet und ein Raum gebildet wird, der teilweise **durch** die Schicht Halbleitermaterial (14), den ersten Teil der Randzone (3') und die zweite elektrisch leitende Schicht (18, 27) begrenzt wird,
(v) das Zuführen einer Elektrolytflüssigkeit (16) in den teilweise begrenzten Raum in einer solchen Menge, dass die zweite elektrisch leitende Schicht (18, 27) **durch** diese Flüssigkeit (16) räumlich von der Schicht Halbleitermaterial (14) getrennt wird, und
(vi) das örtliche Erhitzen des restlichen, noch nicht im vierten Schritt (iv) erhitzten Teils der von dem thermoplastischen Material (3) bestimmten Randzone, während das Material des Restes des Elements nicht erhitzt wird, und gleichzeitig das örtliche Ausüben von Druck auf die Oberfläche dieses restlichen Teils, um zu erreichen, dass der Klebstoff (3) dort an der ersten (24, 23) und zweiten (18, 27) leitenden Schicht haftet und die Flüssigkeit (16) in einem Raum, der ganz **durch** die Schicht Halbleitermaterial (14), die Randzone (3') und die zweite elektrisch leitende Schicht (18, 27) begrenzt wird, eingeschlossen wird.

2. Verfahren nach Anspruch 1, **dadurch gekennzeichnet, dass** der fünfte Schritt (v) und der sechste Schritt (vi) gleichzeitig ausgeführt werden.

3. Verfahren zur Herstellung eines photovoltaischen Elements, das eine Schichtstruktur (29) von zumindest einer ersten elektrisch leitenden Schicht (24), einer auf der ersten elektrisch leitenden Schicht (24) aufgetragenen Schicht von kristallinem Metalloxid-Halbleitermaterial (14), einer zweiten elektrisch leitenden Schicht (27) und einem Elektrolytmedium (16) umfasst, wobei zumindest eine der elektrisch leitenden Schichten (24) transparent ist und auf einem transparenten Substrat (13) aufgetragen ist, und dieses Verfahren umfasst die Schritte:
(i) das Beschaffen einer auf der ersten elektrisch leitenden Schicht (24) aufgetragenen Schicht von kristallinem Metalloxid-Halbleitermaterial (14), auf der eine Schicht Elektrolytmedium angebracht ist, und das Beschaffen einer zweiten elektrisch leitenden Schicht (27),
(ii) das in einer solchen Form auf der ersten leitenden Schicht (24) oder der zweiten leitenden Schicht (27) Anbringen eines thermoplastischen Klebstoffmaterials (3), dass dieses eine Randzone verschafft, die die aufgetragene Schicht Halbleitermaterial (14) und das darauf angebrachte Elektrolytmedium (16) in Umfangsrichtung begrenzt, und
(iii) das Anbringen der zweiten (27) beziehungsweise der ersten (24) elektrisch leitenden Schicht über besagter Randzone, wobei das Klebstoffmaterial (3) auf dieser Randzone und die dadurch begrenzte Schicht Halbleitermaterial (14) und das darauf angebrachte Elektrolytmedium (16) zwischen der ersten (24) und der zweiten (27) elektrisch leitenden Schicht aufgenommen werden, **gekennzeichnet durch** den Schritt:
(iv) das örtliche Erhitzen der von dem thermoplastischen Material (3) bestimmten Randzone, während das Material des Restes des Elements nicht erhitzt wird, und gleichzeitig das örtliche Ausüben von Druck auf die Oberfläche dieser Randzone, um zu erreichen, dass der Klebstoff (3) dort an der ersten (24) und zweiten (27) leitenden Schicht haftet und **dadurch** das Elektrolytmedium (16) in einem Raum, der ganz **durch** die Schicht Halbleitermaterial (14), die Randzone (3) und die zweiten elektrisch leitenden Schicht (27) begrenzt wird, eingeschlossen wird.

4. Verfahren zur Herstellung eines photovoltaischen Elements, das eine Schichtstruktur (31) von zumindest einer ersten elektrisch leitenden Schicht (23), einer auf der ersten elektrisch leitenden Schicht (23) aufgetragenen Schicht von kristallinem Metalloxid-Halbleitermaterial (14), einer zweiten elektrisch leitenden Schicht (18) und einem in der Schicht Halbleitermaterial (14) aufgenommenen Elektrolytmedium (16) umfasst, wobei zumindest eine der elektrisch leitenden Schichten (18) transparent ist und auf einem transparenten Substrat (26) aufgetragen ist, und dieses Verfahren umfasst die Schritte:
(i) das Beschaffen einer auf der ersten elektrisch leitenden Schicht (23) aufgetragenen Schicht von kristallinem Metalloxid-Halbleitermaterial (14), in der ein Elektrolytmedium (16) aufgenommen ist, und das Beschaffen einer zweiten elektrisch leitenden Schicht (18),
(ii) das in einer solchen Form auf der ersten leitenden Schicht (23) oder der zweiten leitenden Schicht (18) Anbringen eines thermoplastischen Klebstoffmaterials (3), dass dieses eine Randzone verschafft, die die aufgetragenen Schicht Halbleitermaterial (14) und das darin aufgenommene Elektrolytmedium (16) in Umfangsrichtung begrenzt, und
(iii) das Anbringen der zweiten (18) beziehungsweise der ersten (23) elektrisch leitenden Schicht über besagter Randzone, wobei das Klebstoffmaterial (3) auf dieser Randzone und die dadurch begrenzte Schicht Halbleitermaterial (14) und das darin aufgenommene Elektrolytmedium zwischen der ersten (23) und der zweiten (18) elektrisch leitenden Schicht aufgenommen werden, **gekennzeichnet durch** den Schritt:
(iv) das örtliche Erhitzen der von dem thermoplastischen Material (3) bestimmten Randzone, während das Material des Restes des Elements nicht erhitzt wird, und gleichzeitig das örtliche Ausüben von Druck auf die Oberfläche dieser Randzone, um zu erreichen, dass der Klebstoff (3) dort an der ersten (23) und zweiten (18) leitenden Schicht haftet und **dadurch** die Schicht Halbleitermaterial (14) und das darin aufgenommene Elektrolytmedium (16) in einem Raum, der ganz **durch** die erste leitende Schicht, die Randzone (3) und die zweiten elektrisch leitenden Schicht (27) begrenzt wird, eingeschlossen werden.

5. Verfahren nach einem der vorigen Ansprüche, **dadurch gekennzeichnet, dass** das im zweiten Schritt (ii) anzubringende thermoplastische Material (3) eine entsprechend der Randzone geformte Folie von thermoplastischem Polymermaterial ist.

6. Verfahren nach einem der obigen Ansprüche, **dadurch gekennzeichnet, dass** das örtliche Erhitzen im vierten (iv) beziehungsweise sechsten (vi) Schritt mit Hilfe einer mit einem Temperaturregler versehenen Stempelvorrichtung durchgeführt wird.

## Revendications

1. Procédé pour fabriquer un élément photovoltaïque comprenant une structure stratifiée (12, 20, 22, 25) composée d'au moins une première couche électriquement conductrice (24, 23), d'une couche d'une matière semi-conductrice d'oxyde de métal cristallin (2, 14) déposée sur la première couche électriquement conductrice (24, 23), d'une deuxième couche électriquement conductrice (18, 27) et d'un liquide électrolytique (16) contenu entre la couche de matière semi-conductrice (2, 14) et la deuxième couche électriquement conductrice (18, 27), dans lequel au moins une des couches électriquement conductrices (24, 23, 18, 27) est transparente et est déposée sur un substrat transparent (21, 26, 13), ledit procédé comprenant les étapes consistant à:
(i) fournir une couche de matière semi-conductrice d'oxyde de métal cristallin (2, 14) déposée sur une première couche électriquement conductrice (24, 23), et à fournir une deuxième couche électriquement conductrice (18, 27);
(ii) arranger sur la première couche conductrice (24, 23) ou sur la deuxième couche conductrice (18, 27) une matière adhésive thermoplastique (3) sous une forme telle qu'elle procure une zone de bord qui délimite la couche déposée de matière semi-conductrice (14) dans la direction périphérique; et
(iii) arranger la deuxième (18, 27), respectivement la première (24) couche électriquement conductrice au-dessus de ladite zone de bord, dans lequel la matière adhésive (3) sur cette zone de bord et la couche de matière semi-conductrice (14) délimitée par celle-ci sont reçues entre les première (24) et deuxième (18, 27) couches électriquement conductrices, **caractérisé par** les étapes successives consistant à:
(iv) chauffer localement au moins une première partie de la zone de bord définie par la matière thermoplastique (3), tout en ne chauffant pas la matière du reste de l'élément, et à exercer simultanément une pression localement sur la surface de cette première partie de manière à entraîner l'adhésif (3) à adhérer à cet endroit aux première (24, 23) et deuxième (18, 27) couches conductrices en vue de former un espace partiellement délimité par la couche de matière semi-conductrice (14), par la première partie de la zone de bord (3') et par la deuxième couche électriquement conductrice (18, 27);
(v) introduire un liquide électrolytique (16) dans l'espace partiellement délimité en une quantité telle que la deuxième couche électriquement conductrice (18, 27) soit spatialement séparée par ce liquide (16) de la couche de matière semi-conductrice (14); et
(vi) chauffer localement la partie restante de la zone de bord définie par la matière thermoplastique (3) non encore chauffée au cours de la quatrième étape (iv), tout en ne chauffant pas la matière du reste de l'élément, et à exercer simultanément une pression localement sur la surface de cette partie restante de manière à entraîner l'adhésif (3) à adhérer aux première (24, 23) et deuxième (18, 27) couches conductrices et à confiner le liquide (16) dans un espace qui est complètement délimité par la couche de matière semi-conductrice (14), par la zone de bord (3') et par la deuxième couche électriquement conductrice (18, 27).

2. Procédé suivant la revendication 1, **caractérisé en ce que** la cinquième étape (v) et la sixième étape (vi) sont exécutées simultanément.

3. Procédé pour fabriquer un élément photovoltaïque comprenant une structure stratifiée (29) composée d'au moins une première couche électriquement conductrice (24), d'une couche d'une matière semi-conductrice d'oxyde de métal cristallin (14) déposée sur la première couche électriquement conductrice (24), d'une deuxième couche électriquement conductrice (27) et d'un milieu électrolytique (16) contenu entre la couche de matière semi-conductrice (14) et la deuxième couche électriquement conductrice (27), dans lequel au moins une des couches électriquement conductrices (24) est transparente et est déposée sur un substrat transparent (13), ledit procédé comprenant les étapes consistant à:
(i) fournir une couche de matière semi-conductrice d'oxyde de métal cristallin (14) déposée sur une première couche électriquement conductrice (24), couche de matière semi-conductrice (14) sur laquelle est arrangée une couche d'un milieu électrolytique (16), et à fournir un deuxième couche électriquement conductrice (27);
(ii) arranger sur la première couche conductrice (24) ou sur la deuxième couche conductrice (27) une matière adhésive thermoplastique (3) sous une forme telle qu'elle procure une zone de bord qui délimite dans la direction périphérique la couche déposée de matière semi-conductrice (14) ainsi que le milieu électrolytique (16) arrangé sur celle-ci; et
(iii) arranger la deuxième (27), respectivement la première (24) couche électriquement conductrice au-dessus de ladite zone de bord, dans lequel la matière adhésive (3) sur cette zone de bord et la couche de matière semi-conductrice (14) délimitée par celle-ci, ainsi que le milieu électrolytique (16) arrangé sur celle-ci, sont reçus entre les première (24) et deuxième (27) couches électriquement conductrices, **caractérisé par** l'étape consistant à:
(iv) chauffer localement la zone de bord définie par la matière thermoplastique (3), tout en ne chauffant pas la matière du reste de l'élément, et à exercer simultanément une pression localement sur la surface de cette zone de bord de manière à entraîner l'adhésif (3) à adhérer à cet endroit aux première (24) et deuxième (27) couches conductrices en vue de confiner le milieu électrolytique (16) dans un espace qui est complètement délimité par la couche de matière semi-conductrice (14), par la zone de bord (3) et par la deuxième couche électriquement conductrice (27).

4. Procédé pour fabriquer un élément photovoltaïque comprenant une structure stratifiée (31) composée d'au moins une première couche électriquement conductrice (23), d'une couche d'une matière semi-conductrice d'oxyde de métal cristallin (14) déposée sur la première couche électriquement conductrice (23), d'une deuxième couche électriquement conductrice (18) et d'un milieu électrolytique (16) reçu dans la couche de matière semi-conductrice (14), dans lequel au moins une des couches électriquement conductrices (18) est transparente et est déposée sur un substrat transparent (26), ledit procédé comprenant les étapes consistant à:
(i) fournir une couche de matière semi-conductrice d'oxyde de métal cristallin (14) déposée sur une première couche électriquement conductrice (23), couche de matière semi-conductrice (14) dans laquelle un milieu électrolytique (16) est reçu, et à fournir une deuxième couche électriquement conductrice (18);
(ii) arranger sur la première couche conductrice (23) ou sur la deuxième couche conductrice (18) une matière adhésive thermoplastique (3) sous une forme telle qu'elle procure une zone de bord qui délimite dans la direction périphérique la couche déposée de matière semi-conductrice (14) ainsi que le milieu électrolytique reçu dans celle-ci; et
(iii) arranger la deuxième (18), respectivement la première (23) couche électriquement conductrice au-dessus de ladite zone de bord, dans lequel la matière adhésive (3) sur cette zone de bord et la couche de matière semi-conductrice (14) délimitée par celle-ci, ainsi que le milieu électrolytique reçu dans celle-ci, sont reçus entre les première (23) et deuxième (18) couches électriquement conductrices, **caractérisé par** l'étape consistant à:
(iv) chauffer localement la zone de bord définie par la matière thermoplastique (3), tout en ne chauffant pas la matière du reste de l'élément, et à exercer simultanément une pression localement sur la surface de cette zone de bord de manière à entraîner l'adhésif (3) à adhérer à cet endroit aux première (23) et deuxième (18) couches conductrices en vue de confiner la couche de matière semi-conductrice (14) ainsi que le milieu électrolytique (16) reçu dans celle-ci dans un espace qui est complètement délimité par la première couche électriquement conductrice, par la zone de bord (3) et par la deuxième couche électriquement conductrice (18).

5. Procédé suivant l'une quelconque des revendications précédentes, **caractérisé en ce que** la matière adhésive thermoplastique (3) à appliquer lors de la deuxième étape (ii) est une feuille constituée d'une matière polymère thermoplastique dont la forme correspond à celle de la zone de bord.

6. Procédé suivant l'une quelconque des revendications précédentes, **caractérisé en ce que** le chauffage local prévu lors de la quatrième (iv), respectivement la sixième (vi) étape, est exécuté en utilisant un dispositif d'estampage équipé d'une commande de la température.
